Europäisches Patentamt

European Patent Office

Office européen des brevets

(19)

(11) Numéro de publication: **0 085 819**

**A1**

(12)

# DEMANDE DE BREVET EUROPEEN

(21) Numéro de dépôt: **82402258.6**

(22) Date de dépôt: **10.12.82**

(51) Int. Cl.³: **B 05 B 12/14**
**G 05 D 16/18**

(30) Priorité: **21.01.82 FR 8200873**

(43) Date de publication de la demande:
**17.08.83 Bulletin 83/33**

(84) Etats contractants désignés:
**AT BE CH DE GB IT LI LU NL SE**

(71) Demandeur: **S K M, Société Anonyme**
**150 Avenue de Stalingrad**
**F-93240 Stains(FR)**

(72) Inventeur: **Binoche, Michel**
**150, Avenue de Stalingrad**
**F-93240 Stains(FR)**

(74) Mandataire: **Roger-Petit, Jean-Camille et al,**
**OFFICE BLETRY 2, Boulevard de Strasbourg**
**F-75010 Paris(FR)**

(54) Régulateur de pression à purge rapide.

(57) Ce régulateur de pression à purge rapide comporte une chambre interne lamellaire (8), sans saillants ni recoins, un orifice d'entrée (9) axial, un orifice de sortie (14) à sa partie supérieure, et un orifice de purge (15) à sa partie inférieure, obturé par un piston coulissant (16).

Le dégagement de l'orifice de purge (15) par le coulissement vers l'intérieur du piston obturateur est commandé par de l'air comprimé pénétrant en (20) et agissant sur le piston (21), solidaire en translation du piston obturateur (16), et son obturation par coulissement en sens inverse du piston obturateur (16) est provoquée par l'action antagoniste du ressort de rappel (22).

Fig.1

Les régulateurs de pression d'un fluide, et notamment d'une peinture sous pression, comportent généralement une chambre interne, un orifice d'entrée du fluide sous pression dans cette chambre, un clapet qu'un ressort et la pression du fluide tendent à appliquer sur son siège en obturant cet orifice d'entrée, et un orifice de sortie pour diriger le fluide à la pression désirée vers son point d'utilisation, une paroi de cette chambre interne étant constituée par une membrane souple dont la face externe est soumise à la pression désirée pour le fluide, cette membrane souple commandant de toute manière appropriée le clapet précité de façon à le décoller de son siège et permettre l'entrée du fluide sous pression dans la chambre interne du régulateur de pression dès que la pression du fluide dans ladite chambre interne est devenue inférieure à celle désirée, régnant sur la face externe de la membrane, et le laisser reposer sur son siège en obturant l'orifice d'entrée du fluide sous pression dans cette chambre dès que la pression du fluide dans ladite chambre est devenue supérieure à la pression désirée, régnant sur la face externe de la membrane.

La présente invention a pour objet un régulateur de pression du type précité, agencé pour pouvoir être très facilement et très rapidement purgé, puis nettoyé et séché, tout spécialement prévu pour pouvoir délivrer alternativement des peintures de teintes différentes, à des pression bien déterminées, pouvant facilement être modifiées.

A cet effet, le régulateur de pression suivant la présente invention est caractérisé en ce qu'il comporte un orifice d'entrée axial, qui peut être alimenté à volonté en peinture de la teinte désirée, en solvant ou en air comprimé, un orifice de sortie, à sa partie supérieure, qui peut être relié au lieu d'utilisation du fluide maintenu à la pression désirée, et un orifice de purge, à sa partie inférieure, avec un dispositif d'obturation, susceptible d'être commandé de l'extérieur.

La chambre interne du régulateur, est préférablement de révolution, et de volume aussi réduit que possible pour en accélérer la purge et diminuer les pertes de peinture lors de chaque purge ; c'est ainsi qu'elle peut être quasiment lamellaire et ne comporter ni saillants, ni recoins, susceptibles de ralentir la purge, de rendre le nettoyage plus difficile et d'être à l'origine de formation de bulles, lors des changements de teintes.

La commande de l'ouverture du clapet fermant l'orifice de purge est préférablement obtenue par air comprimé, et sa fermeture par ressort de rappel.

Alors que, dans les installations de peinture utilisant un pistolet projetant successivement des peintures de teintes diverses, et notamment s'il s'agit de pistolets du type électrostatique à bol tournant, pour lesquels le débit de la peinture, et par conséquent sa pression, doit être modifiée fréquemment, et rapidement, suivant la nature des objets à peindre, on est dans l'obligation de prévoir un tel régulateur de pression sur chacune des canalisations d'alimentation du changeur de teintes, et par conséquent autant de régulateurs de pression qu'il y a de teintes à utiliser, il suffit d'un seul régulateur de pression à purge rapide, suivant la présente invention, entre le chargeur de teintes et le pistolet.

Le dessin annexé montre à titre d'exemple un mode de réalisation de la présente invention.

La figure 1 montre en coupe un tel régulateur de pression.

La figure 2 est une vue schématique d'une installation de peinture classique, utilisant alternativement des teintes diverses.

La figure 3 est une vue analogue d'une installation suivant la présente invention.

Une membrane souple 1 est tendue par des boulons 2 entre un flasque extérieur 3 et un flasque intérieur 4 ; ce flasque extérieur 3 délimite avec la membrane souple 1 une chambre externe 5 percée d'un orifice taraudé 6 permettant l'introduction d'air comprimé à la pression désirée, qui peut être contrôlée par un manomètre non représenté.

Le flasque intérieur 4 délimite avec la membrane souple 1 et la pièce 7 une chambre interne 8 percée d'un orifice d'entrée axial 9 obturé par une bille 10 que le ressort 11 tend à maintenir appliqué sur son siège 12.

Le fluide dont la pression doit être réglée peut pénétrer dans ce régulateur de pression à travers son orifice d'entrée 13, axial,et en sortir, à la pression désirée, par l'orifice de sortie 14 prévu à sa partie supérieure.

Ce régulateur comporte en outre un orifice de purge 15, à sa partie inférieure, normalement obturé par le piston coulissant 16.

Une pièce 17 est rendue solidaire de la membrane souple 1 par le boulon 18 ; elle est en forme de champignon, telle que la chambre interne 8 soit lamellaire, de capacité aussi faible que possible, avec un minimum de saillants ou de recoins, et elle est prolongée par une tige 19 qui décolle la bille 10 de son siège 12, à l'encontre de la poussée du ressort 11 et du fluide, dès que sa pression dans cette chambre interne 8 devient inférieure à la pression de l'air comprimé dans la chambre externe 5.

L'ouverture de l'orifice de purge 15, par coulissement du piston obturateur 16, est commandée,à volonté,par de l'air comprimé arrivant en 20 et agissant sur le piston 21, solidaire en translation du piston obturateur 16, tandis que la fermeture de cet orifice par coulissement en sens inverse dudit piston obturateur 16 est obtenue par l'action antagoniste du ressort de rappel 22.

Tout l'intérieur du régulateur de pression est préférablement traité avec un produit anti-adhérent.

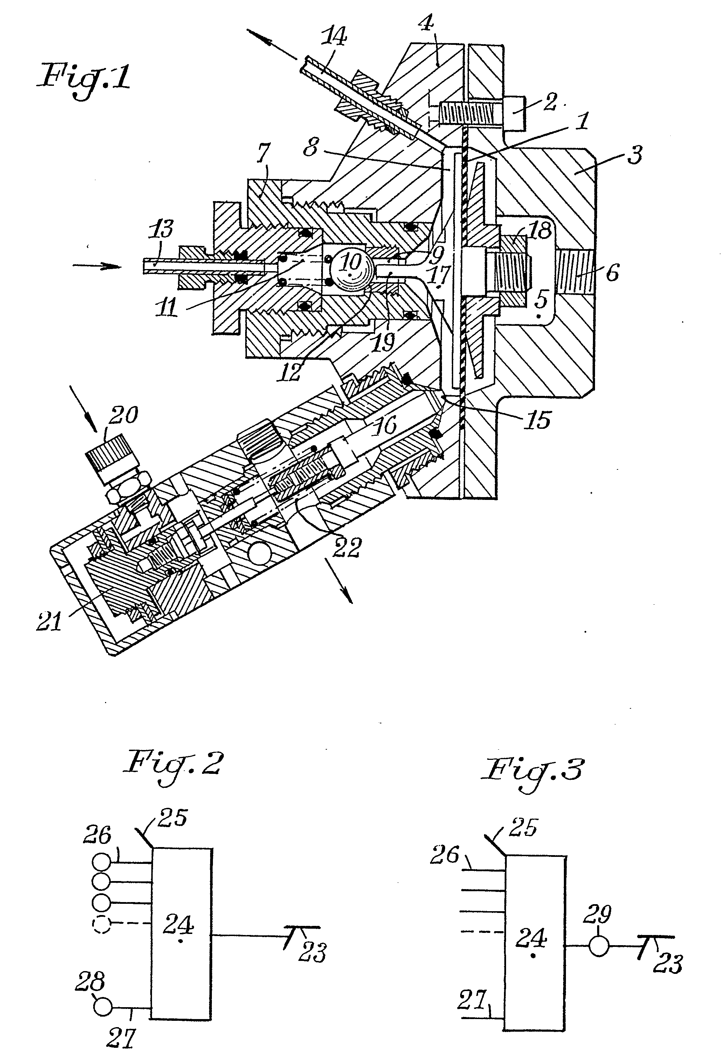

Dans une installation classique de peinture, utilisant alternativement plusieurs teintes, telle que celle montrée schématiquement à la figure 2, le pistolet 23,souvent un pistolet du type électrostatique à bol tournant, est alimenté alternativement en peinture de la teinte choisie, en solvant, ou en gaz comprimé,par le changeur de teintes 24, lui-même alimenté par les canalisations 25 d'air comprimé, 26 de teintes diverses,et 27 de solvant, et il faut prévoir un régulateur de pression 28 pour chacune des canalisations d'alimentation 26 des différentes teintes.

Par contre, dans l'installation suivant la présente invention, un seul régulateur de pression à purge rapide 29 suffit, entre le changeur de teintes 24 et le pistolet 23.

- REVENDICATIONS -

1. Régulateur de pression comportant une chambre interne, un orifice d'entrée du fluide sous pression dans cette chambre, un clapet qu'un ressort et la pression du fluide tendent à appliquer sur son siège, en obturant cet orifice d'entrée, et un orifice de sortie pour diriger le fluide à la pression désirée vers son point d'utilisation, une paroi de cette chambre interne étant constituée par une membrane souple dont la face externe est soumise à la pression désirée pour le fluide, cette membrane souple commandant de toute manière appropriée le clapet précité de façon à le décoller de son siège et permettre l'entrée du fluide sous pression dans la chambre interne du régulateur de pression dès que la pression du fluide dans ladite chambre interne est devenue inférieure à celle désirée régnant sur la face externe de la membrane, et le laisser reposer sur son siège en obturant l'orifice d'entrée du fluide sous pression dans cette chambre dès que la pression du fluide dans ladite chambre est devenue supérieure à la pression désirée régnant sur la face externe de la membrane, caractérisé en ce que l'orifice de sortie (14) est à la partie supérieure de la chambre interne (8) du régulateur, que cette chambre interne (8) est lamellaire, sans saillants ni recoins, et qu'un orifice de purge (15), normalement obturé, est prévu à la partie inférieure de la chambre interne.

2. Régulateur de pression suivant la revendication 1, caractérisé en ce que l'orifice de purge (15) est obturé par un piston (16) dont l'ouverture, par coulissement axial, est commandée à volonté, par de l'air comprimé arrivant en (20) et agissant sur le piston (21), solidaire en translation du

0085819

piston obturateur (16), tandis que la fermeture de cet orifice par coulissement en sens inverse dudit piston obturateur (16) est obtenue par l'action antagoniste du ressort de rappel (22).

3. Régulateur de pression suivant l'une quelconque des revendications 1 ou 2, caractérisé en ce que les surfaces de sa chambre interne sont traitées avec un produit anti-adhérent.

4. Installation de peinture utilisant un régulateur de pression suivant l'une quelconque des revendications 1 à 3, caractérisée en ce que le régulateur de pression est monté de façon que sa membrane (1) et sa chambre lamellaire (8) soient sensiblement verticales.

5. Installation de peinture suivant la revendication 4, caractérisée en ce que l'arrivée (13) du fluide dont la pression doit être régularisée est sensiblement horizontale.

6. Installation de peinture suivant l'une quelconque des revendications 4 ou 5 destinée à projeter alternativement des teintes différentes, caractérisée en ce qu'elle comporte un seul régulateur de pression à purge rapide (29) suivant l'une des revendications 1 ou 2 entre le changeur de teintes (24) et le pistolet (23).

0085819

Fig.1

Fig.2

Fig.3

Office européen
des brevets

**RAPPORT DE RECHERCHE EUROPEENNE**

EP  82 40 2258

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-3 605 683  (WIGGINS)<br>* Colonne  2, ligne 51 - colonne 3, ligne 8; figure 2 *<br>--- | 1,2,3 | B 05 B   12/14<br>G 05 D   16/18 |
| A | DE-A-2 747 707  (DAIMLER-BENZ)<br>* Pages 5,6; figure 2 *<br>----- | 1,2,3 | |

DOMAINES TECHNIQUES
RECHERCHES (Int. Cl. ³)

B 05 B
G 05 D

Le présent rapport de recherche a été établi pour toutes les revendications

| Lieu de la recherche<br>LA HAYE | Date d'achèvement de la recherche<br>25-04-1983 | Examinateur<br>WOHLRAPP R.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82